# EUROPEAN PATENT APPLICATION

(11) **EP 0 919 175 A2**
(43) Date of publication of application: **02.06.1999**
(21) Application number: 98122334.0
(22) Date of filing: 25.11.1998
(51) Int. Cl.: A47J 41/00

(54) **A synthetic resin insulated receptacle**

(30) Priority: 01.12.1997 JP 330703/97
(71) Applicant: Nippon Sanso Corporation, Tokyo 105-0003 (JP)
(72) Inventor: Fujii, Takafumi c/o Nippon Sanso Corp., Tokyo 105-0003 (JP); Yamada, Masashi c/o Nippon Sanso Corp., Tokyo 105-0003 (JP); Furuyama, Kensuke c/o Nippon Sanso Corp., Tokyo 105-0003 (JP); Tanaka, Atsuhiko c/o Nippon Sanso Corp., Tokyo 105-0003 (JP)
(74) Representative: Munk, Ludwig, Dipl.-Ing.

(57) **Abstract**

This invention relates to synthetic resin insulated receptacles which maintain insulating capacity over a long period of time and which are light weight, inexpensive, and have a long product life.

An insulated vessel (1) is characterized in a synthetic resin inner vessel (3) being accommodated in a synthetic resin outer vessel (4) which is slightly larger and of similar shape so as to form a gap (5), and an insulating layer (6) is provided wherein a gas (Z) with low thermal conductivity is filled in a gas filling vessel (7) made of a superior gas barrier synthetic resin in the gap (5) of the vessel having double walled structure by integrally joining the edges (3a), (4a) of each opening, and in which adsorbents comprising a moisture adsorbent (M), an oxygen adsorbent (S), and a carbon adsorbent (T) are distributed. In addition, by maintaining the gas barrier property and adsorbing and eliminating moisture so that the synthetic resin of the insulating layer (6) is always dry, leakage of the filled gas with a low thermal conductivity and the penetration of atmospheric components is decreased, the filled partial pressure of the gas (Z) with a low thermal conductivity in the insulation layer (6) is always well preserved, and the insulating capacity is maintained over a long period of time.

## Description

### BACKGROUND OF THE INVENTION

### Field of the Invention

The present invention relates to insulated receptacles which include insulated vessels such as thermos bottles, cooler boxes, ice boxes, insulated cups, insulated ware, heat-retaining lunch boxes, etc., and insulated lids which cover the opening of said insulated vessels, and in particular relates to synthetic resin insulated vessels having a double walled structure wherein an insulating layer having a gas with a low thermal conductivity filled therein is interposed between the synthetic resin inner vessel and the synthetic resin outer vessel.

This application is based on patent number Hei 9-330703 tiled in Japan, the contents of which are incorporated herein by reference.

### Description of Related Art

Conventionally, for insulated vessels which as thermos bottles, heat-retaining lunch boxes, and insulated cups, the development and production of insulated vessels made of synthetic resins has progressed because of such advantages as their light weight, the ease of the molding process, low manufacturing cost, etc. This type of synthetic resin insulated vessel has all inner vessel of synthetic resin accommodated within all outer vessel of synthetic resin a little larger than the inner vessel and of similar shape, and disposed so as to be separated by a gap, and these vessels are bonded at the edges of their respective openings forming a receptacle having double walled structure using the inner and outer vessels as walls with a gap interposed therebetween. A gas with a low thermal conductivity comprising at least one type of krypton, xenon, or argon is filled in this gap as an insulating layer

In addition, an insulated lid which covers these vessels also uses this double walled structure with an insulating layer interposed, has an opening radius and shape conforming to the opening of the covered vessel, and is formed with a shallow bottom. Below, the term "insulated receptacle" includes both the vessel and lid, and an example of an insulated vessel will be explained below in order to facilitate understanding.

In one method for forming the insulating layer of this type of insulated vessel, an insulating layer is manufactured by filling a gas with a low thermal conductivity directly in the gap formed by the inner and outer vessels being integrally joined, using a method which makes this gap itself an insulating layer. In another method, an insulating layer unit is made in advance by filling a gas with a low thermal conductivity in a gas filling vessel which is made of a superior gas barrier synthetic resin and is formed in a shape conforming to the shape of the gap between the inner and outer vessel, and continually, the inner and outer vessel are integrally combined after disposing this insulating layer unit so as to be accommodated within the gap between the inner and outer vessel.

In the insulated vessel wherein the above gas with a low thermal conductivity is filled directly within the gap between the inner and outer vessels, preventing the gas which is filled therein to maintain the insulating character from leaking from the gap into the atmosphere due to usage through time, etc., a superior gas barrier synthetic resin is used so that the gas with a higher thermal conductivity than air is not introduced into the gap. However, it is well-known that when a superior gas barrier synthetic resin contacts water or moisture, its capacity as a gas barrier degrades. Furthermore, from the point of view of the function of the various types of vessel, accommodating hot water is a necessity that cannot be avoided. As a result, even if a superior gas barrier synthetic resin is used, the completely filled gas with low thermal conductivity will leak due to the contact with hot water, and atmospheric components will penetrate, the partial pressure of the filled gas with low thermal conductivity is lowered, and maintaining the insulating characteristic is difficult.

Due to this, vessels have been proposed wherein a highly water resistant synthetic resin, which is difficult for moisture to penetrate even if it comes into contact with the accommodated hot water, is used in the wall on the side accommodating the hot water. That is, the inner and outer vessels are formed with a highly water resistant synthetic resin, and an insulating layer, consisting of a gas with low thermal conductivity filled in a gas filling vessel formed of superior gas barrier synthetic resin, is disposed in the gap between the inner and outer vessels and integrated with them.

However, over a long period of use, in the gap between the inner and outer vessel formed with the above highly water resistant synthetic resin, oxygen and carbon dioxide gases and moisture which are components of atmosphere pass through the walls of the inner and outer vessel, penetrating into the gap formed therebetween As a result, naturally when the gap itself is the insulating layer, but even when there is a gas filling vessel made of a superior gas barrier synthetic resin disposed and accommodated as the insulating layer in the gap, the moisture component of atmosphere which penetrates into the gap comes into contact with the insulating layer. Thereby, as the superior gas barrier character deteriorates, oxygen and carbon dioxide gas components of the atmosphere penetrate into the insulating layer, and the gas with low thermal conductivity in the insulating layer leaks out into the air. As a result, the partial pressure of the gas with low thermal conductivity in the insulating layer becomes small, and in contrast the partial pressure of the gas with a higher thermal conductivity in the atmospheric components becomes large, bringing about a deterioration of the insulating characteristics.

Thus, in order to prevent gas of this type of container wall from passing out, the thickness of the inner and outer vessels forming the receptacle and the synthetic resin of the gas filling vessel forming the insulating layer can be increased, but this is counter to the intension of the type of insulated receptacle having a light weight design. Thus, there are the problems that the weight becomes large and the material cost vastly increases.

### SUMMARY OF THE INVENTION

The object of the present invention is to provide a synthetic resin insulated receptacle which overcomes the drawbacks of the conventional type of insulated vessel, preserves its insulating capacity over a long period of time, is light weight, is a low cost product, and has a long product life.

In order to overcome the above conventional drawbacks and obtain the above objectives, the synthetic resin insulated receptacle of the present invention provides an insulating layer within the gap of a receptacle wherein an inner synthetic resin vessel is disposed and accommodated in an outer synthetic resin vessel so as to form a gap, the edges of their respective openings are integrally joined, forming a double walled structure. At the same time, a gas with lower thermal conductivity than air is filled into the insulating layer, and absorbents which selectively adsorb oxygen, carbon dioxide gases, and moisture, etc., are provided.

In addition, the synthetic resin insulated receptacle of the present invention can be formed with a gas filling receptacle made from a superior gas barrier synthetic resin in which the insulating layer that fills in the gas with low thermal conductivity and adsorbent has a gas permeability equal to or less than 1.0 g / m² / 24 hr / atm for the object gases O₂ and N₂.

In addition, it is preferable that in the synthetic resin insulated receptacle of the present invention, the gas with a lower thermal conductivity than air filled into the insulating layer comprises at least one among krypton, xenon, or argon.

Furthermore, in the synthetic resin insulated receptacle of the present invention, it is preferable that the oxygen adsorbent provided in the insulating layer and which selectively adsorbs oxygen comprises at least one among zeolite, a molecular sieves, activated charcoal, iron powder, a ferrous salt reducing agent, or ascorbic acid adsorbents

In addition, in the synthetic resin insulated receptacle of the present invention, the carbon dioxide gas adsorbent provided in the insulating layer and which selectively adsorbs carbon dioxide gas comprises at least one among zeolite, a molecular sieves, calcium hydroxide, and amine-type carbon dioxide gas adsorbents.

Additionally, in the synthetic resin insulated receptacle of the present invention, the moisture adsorbent provided in the insulating layer and which selectively adsorbs moisture comprises at least one among calcium hydroxide, calcium chloride, magnesium chloride, and silica gel adsorbents.

In the manner described above, the present invention obtains an insulated receptacle wherein an insulating layer is provided in which the gap formed in the receptacle with a double walled structure made by joining integrally a synthetic resin inner vessel and a synthetic resin outer vessel so as to form a gap is filled with a gas with a lower thermal conductivity than air, and an adsorbent which selectively adsorbs oxygen and carbon dioxide gases and moisture is provided, and thus the dry condition of the synthetic resin forming the insulating layer is always preserved, the gas impermeability of the synthetic resin is well preserved the leaking of the gas with low thermal conductivity filled in the insulating layer to the outside and the penetration of gas components of the atmosphere into the insulating layer is prevented, it is possible to preserve the partial pressures of the gas with low thermal conductivity in the insulating layer at high proportion over a long period of time, and the insulating capacity is preserved for a long period of time, thereby providing superior heat preserving effects.

Furthermore, a synthetic resin insulated receptacle in which the small amount of gas with higher thermal conductivity than air components which penetrate from the atmosphere can always be eliminated by disposing oxygen and carbon dioxide gas adsorbents, and it becomes possible to maintain the partial pressures of the gas with low thermal conductivity in the insulating layer at an even higher proportion, and the insulating capacity is preserved more reliably for a long period of time, thereby providing superior heat preserving effects.

In addition, by disposing an adsorbent for each of the above atmospheric gas components, because the gas which passes into the receptacle wall from the atmosphere and penetrates into the insulation layer can be continuously eliminated, the synthetic resin material of the receptacle wall forming the insulating layer can be a material with a low gas barrier property, and even when using a thin layer of material, the partial pressure of the gas with low thermal conductivity in the insulating layer can be well preserved, and because the insulating capacity is ensured, the selective use of inexpensive resins and the reduction of materials used is possible, thereby lowering the product cost. At the same time, a light weight design is possible. Furthermore, it is possible to adsorb and eliminate oxygen and carbon dioxide gases included in the air components remaining at the time of the evacuation step. Additionally, it is also possible to exclude oxygen and carbon dioxide gases included as impurities in the gas with low thermal conductivity itself.

In addition, because the synthetic resin insulated receptacle of the present invention is a synthetic resin insulated receptacle structured disposing a moisture adsorbent in the insulating layer, in spite of the fact that it is made of a synthetic resin, it can display such remarkable effects as maintaining its insulating capacity for a long period of time even if it is used to store food and drink such as boiled food and hot water, and can be used as a portable insulated receptacle which is light weight and preserves heat retaining characteristics. It can also be used as tableware for providing meals in hospitals, and as heat retaining tableware which has a superior heat retaining capacity, is light weight, feels good to the touch, does not cool, and is used as heat retaining tableware from which hot food can always be eaten.

### BRIEF DESCRIPTION OF THE DRAWINGS

Fig. 1 is a partial cross-section of the insulated vessel and the insulated cover covering it for explaining an example of the synthetic resin insulated receptacle of the present invention.
Fig. 2 is a graph showing the change through time of the heat retaining characteristics of the synthetic resin insulated receptacle of the present invention.

### DETAILED DESCRIPTION OF THE PREFERRED EMBODIMENT

The synthetic resin insulated receptacle of the present invention includes a vessel and a lid which covers the opening of this vessel in a freely detachable manner, and when they accommodate drink or food, the inner vessel facing the side with the accommodated drink or food and the outer vessel on the side facing the air are each made of synthetic resin. These inner and outer vessels are disposed so as to form a gap, and the receptacle has double walled structure wherein the edges of the openings of these inner and outer vessels are integrally joined with the gap interposed.

Additionally, a gas with a lower thermal conductivity than air fills the gap between the inner and outer vessels which form this double walled structure vessel, and by providing an insulating layer in which an oxygen adsorbent, a carbon dioxide gas adsorbent, and a moisture adsorbent which selectively adsorb oxygen, carbon dioxide gas, and moisture, are disposed, the insulating capacity of the double walled structured receptacle is provided, and the oxygen, carbon dioxide gas, and moisture which are components of the atmosphere penetrating from each of the inner and outer vessels forming the double wall are eliminated. In addition, it is possible to eliminate the oxygen, carbon dioxide gas, and moisture which are included as components in air remaining from the evacuation process. In addition, it is possible to eliminate the oxygen, carbon dioxide gas, and moisture included as impurities in the gas with a low thermal conductivity itself, and the insulating capacity is maintained by keeping the gas with a low thermal conductivity at an always high partial pressure in the insulating layer.

By forming an insulating layer, which is filled with gas with a lower thermal conductivity than air and has disposed adsorbents which selectively adsorb oxygen, carbon dioxide gas, and moisture, using in addition a gas filling vessel made of a superior gas barrier synthetic resin with a gas permeability equal to or less than 1.0 g / m² / 24 hrs / atm (object gases O₂, N₂), it is possible to use synthetic resin with superior water resistance and thermal resistance which is suitable for the inner and outer vessels having this gas filling vessel disposed therebetween to accommodate boiled food, hot water, or cold water, and it is possible to form an insulated vessel which can reliably maintain an insulating capacity having more durability.

In addition, as a gas with low thermal conductivity filled into the insulation layer, by using at least one of the gases such as krypton, xenon, and argon, heat loss is reduced because the thermal conductivity is low, they are easy to handle, to obtain and inexpensive, and provide the desired insulating capacity.

In addition, by using at least one type of oxygen adsorbent among zeolite, a molecular sieves, activated charcoal, ferrous powder, a ferrous salt reducing agent, or ascorbic acid as an oxygen adsorbent provided in the insulating layer, and by using a least one type of carbon dioxide gas adsorbent among zeolite, molecular sieves, calcium hydroxide, and amine-type carbon dioxide gas adsorbents, oxygen and carbon dioxide gas can be effectively eliminated, the partial pressure of the gas with low thermal conductivity in the insulating layer can be maintained, and thereby the insulating capacity maintained over a long period of time.

In addition, by using at least one type of moisture adsorbent among calcium hydroxide, calcium chloride, magnesium chloride, or silicon gel, minute amounts of moisture which penetrate can be more effectively adsorbed and eliminated, and the synthetic resin maintained in a dry condition. Also, they maintain the synthetic resin's high gas barrier property, prevent leakage of the gas with low thermal conductivity from the insulating layer, and the penetration of gas components of atmosphere into the insulating layer. The partial pressure of the gas with low thermal conductivity in the insulating layer can be maintained at a high proportion over a long period of time, and the insulating capacity can be more reliably ensured.

Due to this kind of structure, the synthetic resin insulated receptacle of the present invention can maintain its insulating capacity over a long period of time with no deterioration in insulating effect even when used to accommodate drink and food, such as boiled foods and hot water. It is also possible to use this as a light weight insulated receptacle.

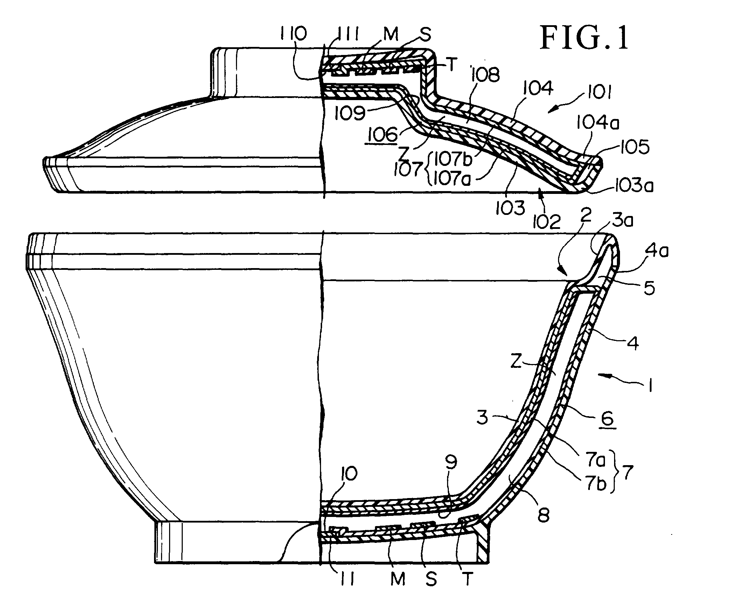

An embodiment of the synthetic resin insulated receptacle of the present invention will be explained referring to the figure. Fig. 1 shows a partial cross-section for explaining the insulated vessel and the insulated lid which covers this vessel as one example of the synthetic resin insulated receptacle of the present invention. Reference numeral 1 is the insulated vessel made of synthetic resin, and shows as an example a vessel shaped for various types of bowl. Reference numeral 101 is a insulated lid made of synthetic resin which covers in a freely detachable manner the opening 2 of this insulated vessel 1.

The insulated vessel 1 is formed with a double walled structure comprising the wall of an inner vessel 3 and the wall of an outer vessel 4, wherein a synthetic resin inner vessel 3 having high water resistance and heat resistance, such as polypropylene, is disposed in a similarly shaped, slightly larger synthetic resin outer vessel 4 with high water resistance and heat resistance so as to form a gap 5. The edges 3a and 4a of the openings are integrally joined by a welding machine, with the gap 5 interposed in between.

In addition, in the gap 5 between the inner vessel 3 and the outer vessel 4, an insulating layer 6 with a shape conforming to the shape forming the gap 5 is provided. In the insulating layer 6, in the space 8 for a gas filling vessel 7 comprising the inner wall 7a and outer wall 7b made of a synthetic resin having a superior gas barrier property with a gas permeability (for gases such as O₂ and N₂) equal to or less than 1.0 g / m² / 24 hr / atm, a gas with a low thermal conductivity Z comprising at least one among krypton, xenon, and argon, etc., is filled airtight at about atmospheric pressure, and provided with a moisture adsorbent M which selectively adsorbs moisture, an oxygen adsorbent S which selectively adsorbs oxygen, and a carbon dioxide gas adsorbent T which selectively adsorbs carbon dioxide gases. Additionally, on the surface of the space 8 of the inner wall 7a of the gas filling vessel 7, a radiant heat isolating member 9, such as copper foil, is disposed and attached.

Moreover, as a superior gas barrier synthetic resin having the above gas permeability, polyesters such as polyethylene terephthalate, polybutylene terephthalate, polyethylene naphthalate, or synthetic resins such as polyamide, ethylene vinyl alcohol, polyvinylidene chloride, polyacrylonitrile, polyvinyl alcohol, etc. can be effectively used.

In addition, as the moisture adsorbent M having the capacity to selectively adsorb moisture, calcium hydroxide, calcium chloride, magnesium chloride, silica gel, etc., can be effectively used. Additionally, these are stored in a specified amount in a permeable paper or cloth sack, and disposed and fixed in an appropriate location in the gap 8 within the gas filling vessel 7.

Additionally, as an oxygen adsorbent S which selectively adsorbs oxygen, zeolite, a molecular sieves, active charcoal, iron powder, a ferrous salt reducing agent, and ascorbic acid can be effectively used.

Further, as a carbon dioxide gas adsorbent T, zeolite, a molecular sieves, calcium hydroxide, calcium chloride, magnesium chloride, and amine-type carbon dioxide gas adsorbents can be effectively used.

Moreover, as an adsorbent which effectively and simultaneously adsorbs the two components oxygen and carbon dioxide gas, the disoxidants "Ageless E", "Ageless SA" and "Ageless Z-PT" ("Ageless" is a registered trademark of Mitsubishi Gas and Chemical Corporation), for example, can be effectively used.

Any of these can be stored in a specified amount in a permeable paper or cloth sack and disposed and fixed at an appropriate location in the gap 8 in the gas filling vessel 7.

Additionally, although each of the above-mentioned adsorbents has been explained as an example wherein one adsorbent which selectively adsorbs a particular component is used, if an adsorbent having an adsorbing capacity for a plurality of adsorbed components is used, a plurality of adsorbed components can be adsorbed together with one common adsorbent, and in addition, if an adsorbent which can adsorb these various components all together is used, of course one adsorbent can be used.

Reference numeral 10 is the gas supply opening of the gas filling vessel 7, and reference numeral 11 is a sealing plate which seals airtight this gas supply opening 10. In addition, the radiant heat isolating member 9 disposed facing the side of space 8 of the inner wall 7a of the gas filling vessel 7 can be formed by, for example, by metal foil and plating of, for example, aluminium, copper, or nickel. The radiant heat isolator 9 can also be disposed on the surface facing the space 8 of the outer wall 7b, and a better effect can be obtained by disposing these on both surfaces. In addition, they can be disposed between the gas filling vessel 7 and the inner vessel 3 or the outer vessel 4.

Next, the insulated lid 101 which covers the opening 2 of the above-described insulated vessel 1 will be explained. This insulated lid 101 differs from the above-described insulated vessel 1 in that it is inverted and used in an horizontal position, and it has a thin bottom. However, their structures are almost completely the same. That is, when in use as a cover, the synthetic resin lid inner vessel 103 positioned facing the accommodated food and drink is disposed within a synthetic resin lid outer vessel 104 having a similar but slightly larger shape, positioned facing the atmosphere when used as a cover, their shapes conform and are accommodated within each other, forming a gap 105. Their respective opening edges 103a and 104a are integrally joined, forming a double walled structure comprising the wall of the lid inner vessel 103 and the wall of the lid outer vessel 104 with a gap 105 interposed therebetween. Additionally, each of the lid inner vessel 103 and the lid outer vessel 104 are formed with a water resistant and heat resistant synthetic resin such as polypropylene.

Additionally, in the gap 105 between the above-described lid inner vessel 103 and the lid outer vessel 104, an insulating layer 106, with a shape conforming to the shape formed as the gap 105, is disposed. Concerning the insulating layer 106, in the space 108 of the gas filling vessel 107 comprising the inner wall 107a and outer wall 107b made of a superior gas barrier synthetic resin having a gas permeability (for O₂, N₂) equal to or less than 1.0 g / m² / 24 hr / atm, a gas Z with low thermal conductivity comprising at least one of the gases such as krypton, xenon, and argon etc. is filled airtight at about atmospheric pressure. Along with this, a moisture adsorbent M, an oxygen adsorbent S, and a carbon dioxide gas adsorbent T are disposed. Additionally, on the surface of the side of the space log of the inner wall 107a of the gas filling vessel 107, a radiant heat isolating member 109, for example, copper foil, is disposed and fixed.

As a superior gas barrier synthetic resin having the above gas permeability, polyesters such as polyethylene terephthalate, polybutylene terephthalate, polyethylene naphthalate, or synthetic resins such as polyamide. ethylene vinyl alcohol, polyvinylidene chloride, polyacrylonitrile, polyvinyl alcohol, etc., can be effectively used.

In addition, as a moisture adsorbent M having the capacity to selectively adsorb moisture, calcium hydroxide, calcium chloride, magnesium chloride, silica gel, etc., can be effectively used. Additionally, these are stored in a specified amount in a permeable paper or cloth sack, and disposed and fixed in an appropriate location in the gap log within the gas filling vessel 107.

Additionally, as an oxygen adsorbent S which selectively adsorbs oxygen, zeolite, a molecular sieves, active charcoal, iron powder, a ferrous salt reducing agent, or ascorbic acid can be effectively used.

Further, as a carbon dioxide gas adsorbent T, zeolite, a molecular sieves, calcium hydroxide, calcium chloride, magnesium chloride, or amine-type carbon dioxide gas adsorbents can be effectively used.

Additionally, as an adsorbent which effectively and simultaneously absorbs the two components oxygen and carbon dioxide gas, the disoxidants "Ageless E", "Ageless SA" and "Ageless Z-PT" ("Ageless" is a registered trademark of Mitsubishi Gas and Chemical Corporation), for example, can be effectively used.

Any of these can be stored in a specified amount in a permeable paper or cloth sack and disposed and fixed at an appropriate location in the gap 108 in the gas filling vessel 107.

Although each of the above-mentioned adsorbents has been explained as an example wherein one adsorbent which selectively adsorbs a particular component is used, if an adsorbent having an adsorbing capacity for a plurality of adsorbed components is used, a plurality of adsorbed components can be adsorbed together with one common adsorbent, and in addition, if an adsorbent which can adsorb these various components together is used, of course one adsorbent can be used.

In addition, reference numeral 110 is the gas supply opening of the gas filling vessel 107, and reference numeral 111 is a sealing plate which seals airtight this gas supply opening 110. In addition, the radiant heat isolating member 109 disposed facing the side of space 108 of the inner wall 107a of the gas filling vessel 107 can be formed by, for example, by metal foil and plating, of for example, aluminium, copper, and nickel. Tile radiant heat isolating member 109 can also be disposed on the surface facing the space 108 of the outer wall 107b, and a better effect can be obtained by disposing these on both surfaces In addition, they can be disposed between the gas filling vessel 107 and the inner vessel 103 and the outer vessel 104.

The above the synthetic resin insulated vessel 1 and insulated lid 101 of the present invention are manufactured by the following method. Moreover, although the insulated vessel 1 and the insulated lid 101, as described above, have differences in shape, their structures are nearly identical. Additionally, the manufacturing method will only be explained for the insulated vessel 1 because it is almost the same as that of the insulated lid, and consequently the manufacturing method for the insulated lid 101 will be omitted. In addition, for the insulated lid 101, by substituting "lid inner vessel" for "inner vessel" and "lid outer vessel" for "outer vessel", and because in the structure wherein the reference numerals of the insulated lid 101 are common to the reference numerals of the "insulting vessel 1" where the last two digits of the value 100 show the same reference numeral, it is possible to understand sufficiently the manufacturing process of the insulated lid 101 by the following explanation of the manufacturing process of the insulated vessel 1.

First, an inner vessel 3 of a desired shape and an outer vessel 4 of similar shape and slightly larger than the inner vessel 3 are manufactured from a heat resistant and water resistant synthetic resin such as polypropylene by a molding process to a thickness of 1.0 ∼ 2.5 mm. In order to obtain the gas filling vessel 7 provided with a gas supplying opening 10 and with a shape conforming to the shape of the gap 5 formed between the integrally jointed inner vessel 3 and the outer vessel 4 , the inner vessel 7a and the outer vessel 7b of a wall with a thickness of about 1.0 mm are made of a synthetic resin, appropriately chosen from each type of the above superior gas barrier synthetic resins , using a molding process. In addition, the side of this inner wall 7a facing the space 8 has disposed and attached a radiant heat isolating member 9 comprising, for example, copper foil. In contrast, on the side of the outer wall 7b facing the space 8, a moisture adsorbent M, an oxygen adsorbent S, and a carbon dioxide gas adsorbent T, stored at a specific amount in each sacks with the gas permeability, are disposed and fixed. Thus, the gas filling vessel 7 having a space 8 formed from the airtight integral joining of the edge of the inner and outer walls 7a, 7b is obtained.

Next, the air in the space 8 is evacuated by an evacuation means such as a vacuum pump via the gas supply opening 10 to a pressure equal to or less than 10 Torr, and then each of the above described gasses Z with low thermal conductivity are supplied to about atmospheric pressure, and a sealing plate 11 comprising a synthetic resin material which is the same as that as the gas filling vessel 7 is placed over the gas supplying opening 10 and attached or adhered airtight, the gas supply opening is sealed, and the insulating layer 6 obtained.

The insulating layer 6 obtained in this manner is disposed in the gap 5 formed between the previously formed inner vessel 3 and outer vessel 4, and each of the edges of the openings 3a, 4a of the inner vessel 3 and outer vessel 4, respectively, are integrally joined by, far example, vibration welding or ultrasonic welding etc. and the desired insulation vessel 1 is obtained.

In the insulation vessel 1 obtained in this manner, the synthetic resin of the gas filling vessel 7 which forms the insulating layer 6 disposed in the gap 5 between the inner vessel 3 and the outer vessel 4 has the moisture incorporated therein adsorbed and eliminated by a moisture adsorbent M disposed within the gas filling vessel 7. As a result, the synthetic resin of the gas filling vessel 7 is dry, the function of the superior gas barrier property it originally possess can be exploited, the leakage to the outside of the gas Z with a low thermal conductivity which fills the gas filling vessel 7 can be stopped, and its sealing within the vessel 7 maintained. In addition, due to the oxygen adsorbent S and the carbon dioxide gas adsorbent T disposed in the gas filling vessel forming the insulating layer 6, the oxygen and carbon dioxide gas components of the atmosphere which penetrate the wall and either into the insulating layer 6 from the outside are always adsorbed and eliminated. In addition, oxygen and carbon dioxide gases included as components in the air remaining at the time of the evacuation process can be adsorbed and eliminated. Additionally, oxygen and carbon dioxide gas included as impurities in the gas with low thermal conductivity itself can be eliminated, the partial pressure of the filled gas Z with low thermal conductivity in the insulating layer 6 can be well maintained, and the insulating effect ensured.

In addition, even after use and the passage of time, the partial pressure of the filled gas Z with low thermal conductivity in the insulating layer can be maintained at a high proportion, and as a result, the insulated vessel of the present invention has the effect of maintaining a superior insulating capacity for a long period of time.

### [Experimental Example]

Based on the above-described manufacturing method, the insulated vessel 1 with a bowl shape and an insulated lid 101 which covers it characterized by the structural data described below were manufactured, and the changing heat retaining characteristics were examined over the 12 months from the time of manufacture.

### a. Structural data of insulated vessel 1

Inner vessel 3: material, polypropylene; thickness, 1.5 mm; capacity, 300 cc.
Outer vessel 4: material, polypropylene; thickness, 1.5 mm; size capable of being disposed on the outer side of the inner vessel forming a gap 5 of 7 mm.
Insulating layer 6: nylon used as material of the gas filling vessel 7; thickness, 1 mm; width of space 8, 5 mm; copper foil attached as radiant heat isolating member 9 of the inner wall 7a; the moisture adsorbent M, oxygen adsorbent S, and carbon dioxide gas adsorbent T listed below are disposed in the space 8; krypton gas supplied and filled at about atmospheric pressure as the gas Z with low thermal conductivity after vacuum evacuation of the space 8 to 10 Torr or less.
Moisture adsorbent M: after activation processing of 10 g of silica gel, a sack made of porous Japanese paper (washi) was filled therewith.
Oxygen adsorbent S, carbon dioxide gas adsorbent T: as a common adsorbent tor both components, 20 g of "Ageless E" disoxidant made by Mitsubishi Gas and Chemical Corporation, Inc., was used to fill a sack of Japanese paper (washi) after activation processing.

The insulating layer 6 was disposed in the gap 5 formed between the above-described inner vessel 3 and outer vessel 4, the edges of the respective openings 3a and 4a of the inner layer 3 and outer layer 4 were integrally welded airtight by vibration welding, and the desired insulated vessel 1 was obtained.

### b. Structure data of the insulated lid 101

Lid inner vessel 103: material, polypropylene; thickness, 1.5mm; and made a shape and size such that it can be mounted freely detachably on the opening 2 of the above-described insulated vessel 1.
Lid outer vessel 104: material, polypropylene; thickness, 1.5 mm; made a size such that it can be disposed on the outer side of the lid inner vessel 103 forming a gap of 7 mm.
Insulating layer 106: nylon used as material of the gas filling vessel 107; thickness, 1 mm; width of space 108, 5 mm; copper foil attached as radiant heat isolating member 109 of the inner wall 107a; the moisture adsorbent M, oxygen adsorbent S, and carbon dioxide gas adsorbent T listed below are disposed in the space 108; krypton gas supplied and filled at about atmospheric pressure as the gas Z with low thermal conductivity after vacuum evacuation of the space 108 to 10 Torr or less.
Moisture adsorbent M: after activation processing of 10 g of silica gel, a sack made of porous Japanese paper (washi) was filled therewith.
Oxygen adsorbent S, carbon dioxide gas adsorbent T: as a common adsorbent for both components, 20 g of "Ageless E" disoxidant made by Mitsubishi Gas and Chemical Company, Inc., was used to fill a sack of Japanese paper (washi) after activation processing.

The insulating layer 106 was disposed in the gap 105 formed between the above-described lid inner vessel 103 and lid outer vessel 104, the edges of the respective openings 103a and 104a of the lid inner layer 103 and lid outer layer 104 were integrally welded airtight by vibration welding, and the desired insulated lid 101 was obtained.

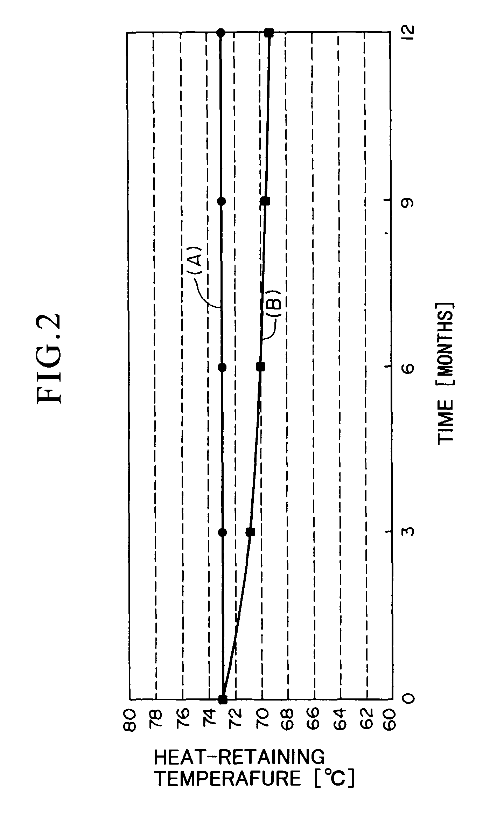

In the insulated vessel 1 of the present invention having the above-described structural data, 300 cc of hot water in 95 °C was accommodated, its opening was covered by the insulated lid 101 of the present invention having the above-described structural data, and the change in temperature after one hour was examined as the heat retaining capacity. For the same insulated receptacle, this examination was carried out once every three months for 12 months, and the change in heat retaining capacity over time was ascertained. This is shown graphically in Fig. 2, by the curve (A) of the graph of the change over time of the heat retaining capacity, where the abscissa shows the passage of time (in months) and the ordinate shows the heat-retention temperature (in °C) after one hour of accommodation.

Furthermore, in order to confirm the effect of the heat retaining capacity in the insulated vessel of the present invention, the heat retaining capacity of an insulated vessel used as a comparative example not having a moisture adsorbent M, an oxygen adsorbent S, or a carbon dioxide gas adsorbent T disposed in the gas filling vessels 7, 107 forming the insulating layers 6, 106 was examined similarly. This result is shown by the curve (B) as compared with the curve (A) of the heat retaining temperature of the present insulated vessel in Fig.2 .

As is clear from Fig. 2, the heat-retention temperature after the passage of one hour as shown by curve (A) of the heat-retention temperature of the insulated receptacle of the present invention was 73° C, and 12 months subsequent to the time of manufacture, the heat-retention temperature after the passage of one hour was similarly 73° C, and almost no deterioration of the heat retaining capacity was seen.

In contrast, in the curve (B) of the heat-retaining temperature of an insulated vessel used as a comparative example not having a moisture adsorbent M, an oxygen adsorbent S, or a carbon dioxide gas adsorbent T disposed in the gas filling vessel forming the insulating layer, immediately after manufacture the heat-retaining temperature after the passage of one hour was 73° C, which was the same temperature as the heat-retaining temperature of the above-described insulated receptacle of the present invention. However, after three months, the heat-retaining temperature after the passage of one hour was 71° C, after 6 months, the heat-retaining temperature after the passage of one hour was 70° C, after 9 months, 69.5° C, and after 12 months, 69.2° C, and thus a deterioration was seen.

In this manner, between the insulated receptacle of the present invention and the insulated receptacle of the comparative example, in one year (12 months) a temperature difference about 4° C in the heat-retaining temperature was produced, and furthermore, with the passage of time, the fact that as time passed the temperature difference in the heat-retaining capacity increased means that we can very easily predict the above-described phenomenon from this tendency.

From the above, it is clear that the synthetic resin insulated receptacle of the present invention can maintain its heat retaining capacity over a long period of time without change, and that as an insulated receptacle, it produces the effect of maintaining a remarkable insulating capacity.

Moreover, in the above embodiment and experimental example, the insulating layers 6, 106 disposed in the respective gaps 5, 105 between the inner vessel 3 and outer vessel 4, and between the lid inner vessel 103 and the lid inner vessel 104 was explained using an example formed with a gas Z with low thermal conductivity and pre-determined component adsorbents M, S, and T in separate synthetic resin gas filling vessels 7, 107. However, the present invention is not limited in this respect, and disposing a gas-impermeable resin in an insulating layer by making the inner and outer vessels by a multicolor molding method in the gaps 5, 105 between the inner vessel 3 and outer vessel 4, and between the lid inner vessel 103 and the lid outer vessel 104, or in an inner and outer vessel formed by the multicolored molding method, formed as to cover with a heat resistant and water resistant synthetic resin, and in the gap 5 formed therebetween, directly filling a gas with low thermal conductivity and pre-determined component adsorbents M, S, and T to form an insulating layer is also satisfactory, and will produce the same effect. In this case, manufacturing steps are omitted and the cost of materials is reduced.

In addition, in the above-described embodiment, a receptacle in the shape of a bowl was explained, but the present invention is not limited in this respect, and of course applies to any receptacle, such as a thermos bottle, a heat retaining lunch box, a cooler box, or an insulated cup, so long as it is a synthetic resin insulated receptacle.

## Claims

1. A synthetic resin insulated receptacle characterized a synthetic resin inner vessel (3) being accommodated inside a synthetic resin outer vessel (4) and disposed so as to form a gap (5), and an insulating layer (6) provided in said gap (5) in the receptacle formed by the double walled structure by integrally joining the respective opening edges (3a), (4a), and at the same time a gas (Z) with a lower thermal conductivity than air being filled into the insulating layer (6), and adsorbents (S), (T) and (M) which selectively adsorb oxygen, carbon dioxide gas, and moisture, etc., being distributed therein.

2. A synthetic resin insulated receptacle according to Claim 1 characterized in the insulating layer (6) wherein the gas (Z) with low thermal conductivity are filled and the adsorbents are disposed being formed by a gas filling vessel (7) comprising a superior gas barrier synthetic resin having a gas permeability equal to or less than 1.0 g / m² / 24 hr / atm for the object gases O₂ and N₂.

3. A synthetic resin insulated receptacle according to Claim 1 characterized in the gas (Z) with a lower thermal conductivity than air filled in the insulating layer (6) comprising at least one among krypton, xenon, or argon.

4. A synthetic resin insulated receptacle according to Claim 2 characterized in the gas (Z) with a lower thermal conductivity than air filled in the insulating layer (6) comprising at least one among krypton, xenon, or argon.

5. A synthetic resin insulated receptacle according to Claim 1 characterized in the oxygen adsorbents (S) which selectively adsorb oxygen distributed in the insulating layer (6) comprising at least one adsorbent among zeolite, a molecular sieves, activated charcoal, iron powder, a ferrous salt reducing agent, or ascorbic acid.

6. A synthetic resin insulated receptacle according to Claim 3 characterized in the oxygen adsorbents (S) which selectively adsorb oxygen distributed in the insulating layer (6) comprising at least one adsorbent among zeolite, a molecular sieves, activated charcoal, iron powder, a ferrous salt reducing agent, or ascorbic acid.

7. A synthetic resin insulated receptacle according to Claim 4 characterized in the oxygen adsorbents (S) which selectively adsorb oxygen distributed in the insulating layer (6) comprising at least one adsorbent among zeolite, a molecular sieves, activated charcoal, iron powder, a ferrous salt reducing agent, or ascorbic acid.

8. A synthetic resin insulated receptacle according to Claim 1 characterized in the carbon dioxide gas adsorbents (T) which selectively adsorb carbon dioxide gas distributed in the insulating layer (6) comprising at least one adsorbent among zeolite, a molecular sieves, calcium hydroxide, and amine-type carbon dioxide gas adsorbents.

9. A synthetic resin insulated receptacle according to Claim 3 characterized in the carbon dioxide gas adsorbents (T) which selectively adsorb carbon dioxide gas distributed in the insulating layer (6) comprising at least one adsorbent among zeolite, a molecular sieves, calcium hydroxide, and amine-type carbon dioxide gas adsorbents.

10. A synthetic resin insulated receptacle according to Claim 4 characterized in the carbon dioxide gas adsorbents (T) which selectively adsorb carbon dioxide gas distributed in the insulating layer (6) comprising at least one adsorbent among zeolite, a molecular sieves, calcium hydroxide, and amine-type carbon dioxide gas adsorbents.

11. A synthetic resin insulated receptacle according to Claim 6 characterized in the carbon dioxide gas adsorbents (T) which selectively adsorb carbon dioxide gas distributed in the insulating layer (6) comprising at least one adsorbent among zeolite, a molecular sieves, calcium hydroxide, and amine-type carbon dioxide gas adsorbents.

12. A synthetic resin insulated receptacle according to Claim 7 characterized in the carbon dioxide gas adsorbents (T) which selectively adsorb carbon dioxide gas distributed in the insulating layer (6) comprising at least one adsorbent among zeolite, a molecular sieves, calcium hydroxide, and amine-type carbon dioxide gas adsorbents.

13. A synthetic resin insulated receptacle according to Claim 1 characterized in the moisture adsorbent (M) which selectively adsorbs moisture distributed in the insulating layer (6) comprising at least one adsorbent among calcium hydroxide, calcium chloride, magnesium chloride, and silica gel.

14. A synthetic resin insulated receptacle according to Claim 3 characterized in the moisture adsorbent (M) which selectively adsorbs moisture distributed in the insulating layer (6) comprising at least one adsorbent among calcium hydroxide, calcium chloride, magnesium chloride, and silica gel.

15. A synthetic resin insulated receptacle according to Claim 4 characterized in the moisture adsorbent (M) which selectively adsorbs moisture distributed in the insulating layer (6) comprising at least one adsorbent among calcium hydroxide, calcium chloride, magnesium chloride, and silica gel.

16. A synthetic resin insulated receptacle according to Claim 11 characterized in the moisture adsorbent (M) which selectively adsorbs moisture distributed in the insulating layer (6) comprising at least one adsorbent among calcium hydroxide, calcium chloride, magnesium chloride and silica gel.

17. A synthetic resin insulated receptacle according to Claim 12 characterized in the moisture adsorbent (M) which selectively adsorbs moisture distributed in the insulating layer (6) comprising at least one adsorbent among calcium hydroxide, calcium chloride, magnesium chloride, and silica gel.
